**Europäisches Patentamt**

**European Patent Office**

**Office européen des brevets**

(11) Veröffentlichungsnummer: **0 443 341 B1**

# EUROPÄISCHE PATENTSCHRIFT

(45) Veröffentlichungstag der Patentschrift: **15.03.95**

(51) Int. Cl.6: **C04B 24/22**, C08G 16/02

(21) Anmeldenummer: **91101010.6**

(22) Anmeldetag: **26.01.91**

(54) **Verfahren zur Herstellung von Naphthalinsulfonsäure-Formaldehydkondensaten mit niedrigem freiem Formaldehydgehalt.**

(30) Priorität: **19.02.90 AT 372/90**

(43) Veröffentlichungstag der Anmeldung:
**28.08.91 Patentblatt 91/35**

(45) Bekanntmachung des Hinweises auf die Patenterteilung:
**15.03.95 Patentblatt 95/11**

(84) Benannte Vertragsstaaten:
**AT BE CH DE DK ES FR GB GR IT LI LU NL SE**

(56) Entgegenhaltungen:
**EP-A- 0 306 629**
**EP-A- 0 380 778**

(73) Patentinhaber: **Chemie Linz GmbH**
**St.Peter-Strasse 25**
**A-4021 Linz (AT)**

(72) Erfinder: **Jäger, Emmerich, Dr.**
**Unterrohr 182**
**A-4532 Rohr (AT)**
Erfinder: **Lechner, Walter**
**Mitterleitenweg 3c**
**A-4040 Linz (AT)**

(74) Vertreter: **Kunz, Ekkehard, Dr.**
**Chemie Linz GmbH**
**Abteilung Patente**
**St. Peter-Str. 25**
**A-4021 Linz (AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Naphthalinsulfonsäure-Formaldehydkondensaten mit niedrigem Gehalt an freiem Formaldehyd.

Naphthalinsulfonsäure-Formaldehydkondensate sowie deren Verwendung als Betonverflüssiger sind beispielsweise in der US-PS 2,141,569, der DE-PS 20 07 603 oder EP-A-214 412 beschrieben. Ihre Herstellung erfolgt durch Sulfonierung von Naphthalin mit konzentrierter Schwefelsäure und anschließende saure Kondensation der entstandenen Naphthalinsulfonsäure mit Formaldehyd bei bevorzugt 110 bis 160°C und Drücken bis zu 30 bar. Nach der Kondensation wird auf einen pH-Wert zwischen 7,5 und 11, bevorzugt pH 8, gestellt. Der Nachteil der bekannten Naphthalinsulfonsäure-Formaldehydkondensate liegt vor allem in ihrem relativ hohen Gehalt an freiem Formaldehyd, der bei etwa 0,3 Gew.% liegt. Der hohe Formaldehydgehalt ist sowohl bei der Verwendung der Harze, beispielsweise als Zusatzmittel zu Zementmischungen, als auch in den daraus hergestellten Bauteilen unerwünscht, da der Formaldehyd in die Umgebung entweicht und umweltbelastend und gesundheitsschädigend ist.

Das Ziel der Erfindung war es, Naphthalinsulfonsäure-Formaldehydkondensate mit einem niedrigen Gehalt an freiem Formaldehyd bereitzustellen. Überraschenderweise werden derartige Kondensate erhalten, wenn man die Kondensationsprodukte von Naphthalinsulfonsäure und Formaldehyd unmittelbar im Anschluß an die Kondensation bei höherer Temperatur und höherem pH-Wert behandelt. Der Gehalt an freiem Formaldehyd liegt bei den erfindungsgemäßen Kondensaten unter 0,1 Gew.%, bevorzugt sogar unter der Nachweisgrenze, das sind weniger als etwa 0,004 bis 0,005 Gew.%.

Gegenstand der Erfindung ist demnach ein Verfahren zur Herstellung von Naphthalinsulfonsäure-Formaldehydkondensaten mit einem niedrigen Gehalt an freiem Formaldehyd, das dadurch gekennzeichnet ist, daß das Kondensationsprodukt von Naphthalinsulfonsäure und Formaldehyd unmittelbar im Anschluß an die Kondensation bei mindestens 80°C auf einen pH-Wert von größer als 11,5 gestellt und bei dieser Temperatur gehalten wird, bis der gewünschte niedrige Gehalt an freiem Formaldehyd erreicht ist.

Bei höheren pH-Werten wird der gewünschte niedrige freie Formaldehydgehalt bereits nach kürzerer Zeit erreicht. Bevorzugt stellt man nach der Kondensation auf einen pH-Wert von größer als 12.

Der bevorzugte Temperaturbereich liegt zwischen 85 und 100°C.

Die Kondensationsprodukte von Naphthalinsulfonsäure und Formaldehyd werden beispielsweise gemäß EP-A-214 412 durch Sulfonierung von Naphthalin mit konzentrierter Schwefelsäure und anschließende saure Kondensation der entstandenen Naphthalinsulfonsäure mit Formaldehyd bei bevorzugt 110 bis 160°C und Drücken von 1 bis 11 bar hergestellt. Die dabei erhaltenen Kondensationsprodukte werden erfindungsgemäß unmittelbar anschließend an die saure Kondensation auf eine Temperatur von mindestens 80°C, bevorzugt 85 bis 100°C, gebracht, worauf ein pH-Wert von größer als 11,5 bevorzugt größer als 12, eingestellt und bei dieser Temperatur gehalten wird, bis der gewünschte niedrige Gehalt an freiem Formaldehyd erreicht ist.

Überraschenderweise erhält man Naphthalinsulfonsäure-Formaldehydkondensate mit derart niedrigem Gehalt an freiem Formaldehyd jedoch nur, wenn diese Behandlung sofort nach beendeter Kondensation durchgeführt wird. Kühlt man das Produkt nach der Kondensation beispielsweise auf Raumtemperatur ab, oder hält man es einige Zeit bei niedrigerem pH-Wert, gelingt die Reduktion von Formaldehyd wesentlich schlechter bzw. wird unmöglich. Auch nach langer Wärmebehandlung ist dann keine Reduktion des Formaldehydgehaltes mehr zu erzielen.

Die erfindungsgemäßen Naphthalinsulfonsäure-Formaldehydkonden sate werden vorzugsweise als Zusatzmittel zu Baustoffen, wie z. B. Zementen, Putz- und Mauerbindern, hydraulischen Kalken, Luftkalken, Baugipsen, Anhydritbindern oder Magnesitbindern verwendet. Sie bewirken vor allem eine Verflüssigung des Baustoffes, beispielsweise einer Zement- oder Betonmischung, wodurch gegebenenfalls mit weniger Bindewasser, bei entsprechend höherer Festigkeit des gebildeten Bauteils, das Auslangen gefunden wird.


Beispiel 1:

In einen Kessel mit Rührwerk und einer Vorrichtung zur azeotropen Destillation wurden 964 kg Naphthalinschmelze und 420 l 96 %ige Schwefelsäure chargiert und nach Erreichen einer Sulfonierungstemperatur von 155°C das gebildete Reaktionswasser mit Benzin azeotrop abdestilliert. sobald das gesamte Reaktionswasser aus dem Sulfonierungsgemisch entfernt war, wurde das Schleppmittel abdestilliert.

Der Kessel wurde sodann dicht verschlossen und unter Kühlen 882 l Wasser zugegeben. Bei Erreichen von 120°C wurden über einen Zeitraum von 30 Minuten 670 l 35 %ige Formalinlösung chargiert und anschließend auf 140°C erwärmt. Es wurde 90 Minuten bei dieser Temperatur kondensiert. Dem sauren Harz (pH 0,8) wurden sodann unter Kühlen 830 l Wasser zugegeben und auf 95 °C gekühlt. Anschließend wurden unter leichtem Kühlen etwa 450 l 50 %ige Natronlauge bis zum Erreichen von pH 11,7 zugegeben. Das Reaktionsgemisch wurde 3 Stunden bei 95 °C gehalten und anschließend auf Raumtemperatuar abgekühlt. Das Endprodukt wies einen Feststoffgehalt von 40 Gew.% auf. Die Viskosität lag bei 60 mPa.s (Bestimmung nach DIN 52 562).

Der Formaldehydgehalt des Kondensates wurde sofort nach der Natronlaugezugabe sowie jeweils nach 1, 2 und nach 3 Stunden gemessen. Die Meßwerte sowie die Abnahme des pH-Wertes sind in Tabelle 1 zusammengestellt.

Die Formaldehydbestimmung erfolgte nach einer in Z.Anal.Chem. 281, 17 - 21 (1976) beschriebenen und von uns modifizierten Methode:

3 - 4 g Harz wurden in ein 300 ml-Becherglas eingewogen und in ca. 150 ml dest. Wasser gelöst. Der pH-Wert der Lösung wurde auf exakt pH 10 eingestellt (mit 0,1 n HCl bzw. 0,1 n NaOH). Diese Lösung wurde sodann mit ca. 50 ml1 molarer Natriumsulfitlösung, die vorher ebenfalls exakt auf pH 10 eingestellt wurde, versetzt und 10 min geruhrt. Die durch Bildung des Bisulfitadditionsproduktes entstandene Natronlauge wurde mit 0,1 n HCl auf pH 10 rücktitriert.

$$\text{Berechnung: \% Formaldehyd} = \frac{\text{Verbrauch } 0,1 \text{ n HCl} \cdot 0,3003}{\text{Einwaage}}$$

Die Nachweisgrenze liegt bei etwa 0,004 - 0,005 Gew.%.

Beispiel 2 und 3

Analog zu Beispiel 1 wurden Naphthalinsulfonsäure-Formaldehydkondensate hergestellt, mit dem Unterschied, daß nach der Kondensation auf pH-Werte von 12,2 bzw. 12,6 gestellt wurde. Der Formaldehydgehalt der Kondensate sowie die Abnahme des pH-Wertes nach 0,1, 2 und 3 Stunden sind in Tabelle 1 zusammengestellt.

Vergleichsbeispiele V4 und V5

Analog zu Beispiel 1 wurden Naphthalinsulfonsäure-Formaldehydkondensate hergestellt, mit dem Unterschied, daß nach der Kondensation auf pH-Werte von 10,1 bzw. 11,2 gestellt wurde. Der Formaldehydgehalt der Kondensate nach 0,1, 2 und 3 Stunden ist in Tabelle 1 zusammengestellt.

Vergleichsbeispiel V6

Analog zu Beispiel 1 wurden Naphthalinsulfonsäure-Formaldehydkondensate hergestellt, mit dem Unterschied, daß nach der Kondensation ein pH-Wert von 12 eingestellt, auf Raumtemperatur abgeküht, 3 Stunden bei Raumtemperatur belassen, anschließend auf 95°C erwärmt und 1 Stunde bei 95°C gehalten wurde. Der Formaldehydgehalt des Kondensats lag bei 0,24 Gew.%.

Beispiel 7

Unter Verwendung des gemäß Beispiel 2 erhaltenen Naphthalinsäure-Formaldehydkondensates wurde folgende Betonmischung hergestellt:
In einem 65 l Eirich-Zwangsmischer wurden
38,96 kg Rundkorn 0 - 4 mm
12,98 kg Rundkorn 4 - 8 mm
12,99 kg Rundkorn 8 - 16 mm
12,0 kg Zenemt PZ 275 (F) (Perlmooser Zementwerke, Werk Kirchbichl)
in trockenem Zustand 30 sec gemischt, dann 4,4 kg Wasser und nach weiteren 30 sec 2,23 kg Wasser zugesetzt und noch 1 min gemischt. Anschließend wurden 90 g des in Beispiel 2 erhaltenen Harzes zugesetzt und eine weitere min gemischt. Das Wasser-Zement-Verhältnis betrug 0,54, der Zementgehalt 340 kg Zement/m³ Beton.

Zum Vergleich wurde analog dazu eine Betonmischung ohne Zugabe des Harzes angesetzt.

An den erhaltenen Betonmischungen wurden entsprechend DIN 1048, Blatt 1 bzw. ÖNORM B 3303 folgende Eigenschaften gemessen:
a) Ausbreitmaß in cm als Maß für die Fließfähigkeit
b) Druckfestigkeit nach 18 Stunden, 28 Tagen (Probewürfel mit 15 cm Kantenlänge).

|  | Ausbreitmaß | Festigkeit (Durchschnitt aus 3 Bestimmungen) | |
|---|---|---|---|
|  |  | nach 18 Stunden | nach 28 Tagen |
| ohne Harz | 35 cm | 8,53 N mm$^{-2}$ | 41,3 N mm$^{-2}$ |
| mit Harz | 64 cm | 8,71 N mm$^{-2}$ | 41,5 N mm$^{-2}$ |

Tabelle 1

| Formaldehydgehalt der Harze | | | | |
|---|---|---|---|---|
| Beispiel 1 | Wärmebehandlung bei 95 °C | | | |
|  | nach 0h | nach 1h | nach 2h | nach 3h |
| Formaldehyd (Gew.%) pH | 0,34 11,7 | 0,32 11,7 | 0,28 11.4 | 0,06 9,4 |
| Beispiel 2 | | | | |
| Formaldehyd (Gew.%)* pH | 0,33 12,2 | neg. 12,0 | neg. 11,9 | neg. 11,8 |
| Beispiel 3 | | | | |
| Formaldehyd (Gew.%)* pH | 0,28 12,6 | neg. 12,7 | neg. 12,7 | neg. 12,7 |
| Vergleichsbeispiel V4 | | | | |
| Formaldehyd (Gew.%) ph | 0,34 10,1 | 0,34 9,8 | 0,34 9,7 | 0,34 9,3 |
| Vergleichsbeispiel V5 | | | | |
| Formaldehyd (Gew.%) pH | 0,34 11,2 | 0,33 11,2 | 0,32 10,8 | 0,30 10,2 |
| * neg. .... unter der Nachweisgrenze | | | | |

**Patentansprüche**

1. Verfahren zur Herstellung von Naphthalinsulfonsäure-Formaldehydkondensaten mit einem niedrigen Gehalt an freiem Formaldehyd, dadurch gekennzeichnet, daß das Kondensationsprodukt von Naphthalinsulfonsäure und Formaldehyd unmittelbar im Anschluß an die Kondensation bei mindestens 80 °C auf einen pH-Wert von größer als 11,5 gestellt und bei dieser Temperatur gehalten wird, bis der gewünschte niedrige Gehalt an freiem Formaldehyd erreicht ist.

2. Verfahren zur Herstellung von Naphthalinsulfonsäure-Formaldehydkondensaten gemäß Anspruch 1, dadurch gekennzeichnet, daß das Kondensationsprodukt unmittelbar im Anschluß an die Kondensation auf eine Temperatur von 85 bis 100 °C gestellt wird.

3. Verfahren zur Herstellung von Naphthalinsulfonsäure-Formaldehydkondensaten gemäß Anspruch 1 oder 2, dadurch gekennzeichnet, daß das Kondensationsprodukt unmittelbar im Anschluß an die Kondensation auf einen pH-Wert von größer als 12 gestellt wird.

## Claims

1. Process for the preparation of naphthalenesulphonic acid-formaldehyde condensates having a low content of free formaldehyde, characterized in that the condensation product of naphthalenesulphonic acid and formaldehyde is brought to a pH of greater than 11.5 at not less than 80°C immediately after the condensation, and is kept at this temperature until the desired low content of free formaldehyde is reached.

2. Process for the preparation of naphthalenesulphonic acid/formaldehyde condensates according to Claim 1, characterized in that the condensation product is brought to a temperature of 85 to 100°C immediately after the condensation.

3. Process for the preparation of naphthalenesulphonic acid/formaldehyde condensates according to Claim 1 or 2, characterized in that the condensation product is brought to a pH of greater than 12 immediately after the condensation.

## Revendications

1. Procédé de préparation de condensats d'acide naphtalènesulfonique-formaldéhydeà faible teneur en formaldéhyde libre, caractérisé en ce que le produit de condensation d'acide naphtalènesulfonique et de formaldéhyde est amené à une valeur de pH supérieure à 11,5 directement après la condensation, à au moins 80°C, et est maintenu à cette température jusqu'à ce que la faible teneur désirée en formaldéhyde libre soit atteinte.

2. Procédé de préparation de condensats d'acide naphtalènesulfonique-formaldéhydeselon la revendication 1, caractérisé en ce que le produit de condensation est amené à une température de 85 à 100°C directement après la condensation.

3. Procédé de préparation de condensats d'acide naphtalènesulfonique-formaldéhydeselon la revendication 1 ou 2, caractérisé en ce que le produit de condensation est amené à une valeur de pH supérieure à 12 directement après la condensation.